# EUROPÄISCHE PATENTANMELDUNG

(11) **EP 3 242 013 A1**
(43) Veröffentlichungstag der Anmeldung: **08.11.2017**
(21) Anmeldenummer: 16168260.4
(22) Anmeldetag: 04.05.2016
(51) Int. Cl.: F03D 13/10

(54) **WINDENERGIEANLAGE MIT EINER VORRICHTUNG ZUM DREHEN EINER GONDEL DER WINDENERGIEANLAGE UND VERFAHREN ZUR MONTAGE EINER VORRICHTUNG ZUM DREHEN EINER GONDEL**

(71) Anmelder: Nordex Energy GmbH, 22419 Hamburg (DE)
(72) Erfinder: Rudolph, Lars Christian, 18057 Rostock (DE)
(74) Vertreter: Garrels, Sabine

(57) **Zusammenfassung**

Die vorliegende Erfindung befasst sich mit einem Azimutsystem, mit dem die Gondel der Windenergieanlage um die Längsachse des Turms gedreht wird. Der Erfindung liegt die Aufgabe zugrunde, Baugruppen der Windenergieanlage, insbesondere für das Azimutsystem, möglichst komplex vorzufertigen, damit weniger Arbeiten auf der Baustelle ausgeführt werden müssen.

Die erfindungsgemäße Windenergieanlage besteht aus einem Turm und einer drehbar auf dem Turm gelagerten Gondel, sowie einer Vorrichtung zum Drehen der Gondel um eine Längsachse des Turms. Die Vorrichtung besteht als eine kompakte vorgefertigte Einheit aus einem kompletten Azimutsystem mit einer Azimuttragscheibe, einer Azimutdrehverbindung, einem oder mehreren Azimutantrieben und optional einer Azimutbremseinrichtung. Die Azimuttragscheibe dient der Aufnahme aller für das komplette Azimutsystem notwendigen Komponenten. Das Azimutsystem besteht aus der Azimutdrehverbindung, dem oder den Azimutantrieben und optional der Azimutbremseinrichtung. Durch diese kompakte Bauweise ergeben sich verschiedene Anordnungen auf oder im Turm, sowie in der Gondel als auch in einem separaten Top-Tower-Segment. Dadurch kann diese Vorrichtung für alle möglichen Typen von Windenergieanlagen der verschiedensten Hersteller angewendet werden. Die Anwendung der erfindungsgemäßen Lösung kann insbesondere für kommende Anlagengenerationen, hauptsächlich Windenergieanlagen mit Nennleistungen von mehreren MW von Vorteil sein.

## Beschreibung

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt. In Windenergieanlagen werden zum Drehen unterschiedlicher Komponenten unterschiedliche Verstelleinrichtungen eingesetzt. Beispielsweise wird ein Pitchsystem für die Winkeleinstellung (Pitchwinkel) der Rotorblätter der Anlage benötigt oder ein Azimutsystem für die Drehung der Gondel der Windenergieanlage nach dem Wind. Die Gondel einer Windenergieanlage wird, um einen optimalen Ertrag zu erwirtschaften, ständig nach der Windrichtung ausgerichtet. Die Bezeichnung Azimut wird für alles benutzt, was mit der horizontalen Windnachführung der Gondel zu tun hat. Es ist bekannt, dazu ein motorisch angetriebenes Azimutsystem einzusetzen.

Die vorliegende Erfindung befasst sich in der Hauptsache mit einem Azimutsystem, mit dem die Gondel der Windenergieanlage um die Längsachse des Turms gedreht wird.

Das Azimutsystem ist in der Regel zwischen dem Turmkopf und der Gondel angeordnet und umfasst in einer typischen Ausführung mehrere Azimutantriebe, ein Azimutlager und optional mehrere Azimutbremskaliber. Die Komponenten des Azimutsystems können sich sowohl in der Gondel als auch im Turm befinden. Das Azimutlager besteht in der Regel aus einem Innenring und einem Außenring, wobei sowohl der Innenring als auch der Außenring eine Verzahnung aufweisen oder mit einem Zahnkranz verbunden sein können. Entweder ist der Innenring mit der Gondel verbunden und der Außenring an den Turm gekoppelt oder der Innenring ist an den Turm gekoppelt und der Außenring ist mit der Gondel verbunden. Die Azimutantriebe verfügen üblicherweise über einen Verstellantrieb, beispielsweise einen Elektromotor, ein Getriebe, typischerweise ein Planetengetriebe, und optional eine Bremseinrichtung, beispielsweise eine Elektrobremse.

Bei Windenergieanlagen höherer Leistungsklassen von mehreren MW stößt man an konstruktive Grenzen, die die Umsetzung eines konventionellen Azimutantriebskonzepts, mit innerhalb der Gondel stehend auf einem Maschinenträger angeordneten Azimutantrieben, erschweren. Weiterhin werden in dieser Leistungsklasse die Stufen der Hauptgetriebe immer größer und der Abstand der Drehmomentenstützen steigt, wodurch ebenfalls Bauraum für die Anordnung weiterer Azimutantriebe verloren geht.

In DE 102011089431 A1 wird eine Windenergieanlage offenbart, bei der ein Azimutsystem mit hängend montierten Azimutantrieben im Turmkopf angeordnet ist. Das Azimutsystem ist mit gleichmäßig über den Umfang verteilt angeordneten Antrieben versehen, wobei in dem dargestellten Beispiel vierzehn Azimutantriebe vorgesehen sind. Ähnliche Ausführungen sind aus WO 2012059591 A2 und EP 1371845 A2 bekannt. Die in EP 2079928 B1 offenbarte Lösung zeigt einen mit dem Turm verbundenen Zahnring und verschiedene, mit der Gondel verbundene Module, welche wahlweise mit Giermotoren bestückt werden können. Die Giermotore stehen ihrerseits mit dem Zahnring in Wirkverbindung.

Weitere Möglichkeiten, Azimutsysteme anzuordnen, werden in EP 2196668 A2, EP 1319830 A1 oder WO 2014072157 A1 offenbart. Hier ist das Azimutsystem mit stehend montierten Azimutantrieben im Turmkopf angeordnet. Das Azimutlager kann sich in einem beliebigen Abstand zur Gondel befinden. Die in DE 102012220502 A1 beschriebene Lösung beinhaltet einen Schaftabschnitt, auch als Azimutmodul bezeichnet, welcher zwischen Gondel und Turm angeordnet wird. Der Schaftabschnitt setzt sich aus einem Gondelanschlussflansch, mehreren Azimutantrieben und zwei Halteblechen für die Azimutantriebe zusammen. Das Azimutmodul (Schaftabschnitt) ist mit der Gondel fest verbundenen. Das Azimutlager ist mit dem oberen Ende des Turms fest verbunden.

Die Anordnung des Azimutlagers in der Gondel wird in EP 2395237 A2 gezeigt.

### Darstellung der Erfindung

Der Erfindung liegt die Aufgabe zugrunde, Baugruppen der Windenergieanlage, insbesondere für das Azimutsystem, möglichst komplex vorzufertigen, damit weniger Arbeiten auf der Baustelle ausgeführt werden müssen. Es war zudem eine Lösung zu entwickeln, welche die Anzahl und Größe von Bauteilen, welche auf der Baustelle zu montieren sind, auf ein Minimum reduziert. Gleichzeitig soll für immer leistungsstärker werdende Windturenergieanlagen ein noch leistungsfähigeres Azimutsystem bereitgestellt werden, indem eine erhöhte Anzahl von Azimutantrieben ermöglicht wird, ohne die Gondelabmessungen zu vergrößern.

Die Lösung der Aufgabe erfolgt durch die in den Ansprüchen aufgeführten Merkmale.

Die erfindungsgemäße Windenergieanlage besteht aus einem Turm und einer drehbar auf dem Turm gelagerten Gondel, sowie einer Vorrichtung zum Drehen der Gondel um eine Längsachse des Turms. Die Vorrichtung besteht als eine kompakte vorgefertigte Einheit aus einem kompletten Azimutsystem mit einer Azimuttragscheibe, einer Azimutdrehverbindung, einem oder mehreren Azimutantrieben und optional einer Azimutbremseinrichtung. Die Azimuttragscheibe dient der Aufnahme aller für das komplette Azimutsystem notwendigen Komponenten. Das Azimutsystem besteht aus der Azimutdrehverbindung, dem oder den Azimutantrieben und optional der Azimutbremseinrichtung.

Die Azimuttragscheibe ist ein kreisringförmiges, flaches Bauteil mit mehreren, um den Umfang gleichmäßig oder ungleichmäßig verteilten Aufnahmeöffnungen für eine Aufnahme der Azimutantriebe. Die Azimuttragscheibe weist an ihrer innenliegenden Kante (112) einen kreisringförmigen Flansch auf. Die auf der Azimuttragscheibe angeordnete Azimutdrehverbindung besteht aus einem Innenring mit einer Innenverzahnung und einem Außenring. Der Innenring und der Außenring sind gegeneinander beweglich gelagert, wobei der Außenring fest mit der Azimuttragscheibe verbunden ist. Auf der Azimuttragscheibe sind der oder die Azimutantriebe in der Art montiert, dass jeder Azimutantrieb mit einem Ritzel in die Innenverzahnung des Innenrings eingreift.

Die Azimutbremseinrichtung besteht aus einer kreisringförmigen Azimutbremsscheibe und mindestens einem Azimutbremskaliber, wobei die Azimutbremsscheibe mit dem Innenring der Azimutdrehverbindung lösbar verbunden ist. Die Azimutbremsscheibe steht außerdem in Wirkverbindung mit dem mindestens einen Azimutbremskaliber. Der mindestens eine Azimutbremskaliber ist mit dem Flansch der Azimuttragscheibe verbunden.

In einem Ausführungsbeispiel ist die Vorrichtung außerhalb der Gondel angeordnet, wobei die Azimutantriebe hängend in den Turm hineinragen. Die Azimutdrehverbindung ist hierbei direkt unterhalb der Gondel im oder am Turm angeordnet. Der Innenring der Azimutdrehverbindung ist fest mit der Gondel und der Außenring der Azimutdrehverbindung ist fest mit dem Turm verbunden.

In einem weiteren Ausführungsbeispiel ist die Vorrichtung mit den Azimutantrieben stehend in einem Top-Tower-Segment angeordnet, wobei der Innenring der Azimutdrehverbindung fest mit dem Turm und der Außenring der Azimutdrehverbindung fest mit dem Top-Tower-Segment in der Art verbunden ist, dass sich die Gondel zusammen mit dem Top-Tower-Segment dreht.

In einem weiteren Ausführungsbeispiel ist die Vorrichtung innerhalb der Gondel angeordnet, wobei die Azimutantriebe stehend in die Gondel hineinragen. Der Außenring der Azimutdrehverbindung ist hierbei fest mit der Gondel und der Innenring der Azimutdrehverbindung ist fest mit dem Turm verbunden.

In einem weiteren Ausführungsbeispiel ist die Vorrichtung außerhalb der Gondel angeordnet, wobei die Azimutantriebe stehend in die Gondel hineinragen. Der Außenring der Azimutdrehverbindung ist fest mit der Gondel und der Innenring der Azimutdrehverbindung ist fest mit dem Turm verbunden.

Ein erstes erfindungsgemäßes Verfahren zur Montage einer Vorrichtung auf einen Turm einer Windenergieanlage wird im Folgenden erläutert. Die Vorrichtung ist zum Drehen einer Gondel um eine Längsachse des Turms geeignet, wobei die Vorrichtung als eine kompakte vorgefertigte Einheit aus einem kompletten Azimutsystem mit einer Azimuttragscheibe, einer Azimutdrehverbindung, einem oder mehreren Azimutantrieben und optional einer Azimutbremseinrichtung besteht. Das Verfahren umfasst folgende Schritte:
- Einsetzen der Vorrichtung in eine obere Turmsektion mit den Azimutantrieben hängend
- oder Aufsetzen der Vorrichtung auf eine obere Turmsektion mit den Azimutantrieben hängend
- Montage der oberen Turmsektion auf den Turm,
- Montage der Gondel auf die Vorrichtung,
- Anschließen des Azimutsystems.

Das Anschließen kann ein mechanisches, elektrisches und/oder hydraulisches Anschließen umfassen.

Ein weiteres erfindungsgemäßes Verfahren zur Montage nutzt die gleiche vorhergehend beschriebene Vorrichtung und besteht aus folgenden Schritten:
- Aufsetzen der Vorrichtung auf den Turm mit den Azimutantrieben stehend
- Montage der Gondel auf die Vorrichtung,
- Anschließen des Azimutsystems.

Ein weiteres erfindungsgemäßes Verfahren zur Montage nutzt ebenfalls die gleiche vorhergehend beschriebene Vorrichtung und besteht aus folgenden Schritten:
- Einsetzen der Vorrichtung in ein Top-Tower-Segment mit den Azimutantrieben stehend
- Montage des Top-Tower-Segments auf den Turm,
- Montage der Gondel auf das Top-Tower-Segment,
- Anschließen des Azimutsystems.

Und ein weiteres erfindungsgemäßes Verfahren zur Montage nutzt ebenfalls die gleiche vorhergehend beschriebene Vorrichtung und besteht aus folgenden Schritten:
- Einsetzen der Vorrichtung in die Gondel mit den Azimutantrieben stehend,
- Montage der Gondel auf den Turm,
- Anschließen des Azimutsystems.

Im Unterschied zum Stand der Technik, beispielsweise in
DE 102012220502 A1, bei dem der fest mit der Gondel verbundene Schaftabschnitt erst beim Aufsetzen desselben auf den Turm mit dem Azimutlager verbunden wird, beinhaltet die erfinderische Vorrichtung alle Elemente eines Azimutsystems einschließlich des Azimutlagers. Sie ist variabel einsetzbar und kann mit stehenden und hängenden Azimutantrieben verbaut werden. Dadurch kann diese Vorrichtung für alle möglichen Typen von Windenergieanlagen der verschiedensten Hersteller angewendet werden. Die Vorrichtung ist auf jeden beliebigen Turmtyp adaptierbar. Vorteile sind insbesondere darin zu sehen, dass die Vorrichtung für kommende Anlagengenerationen, hauptsächlich Windenergieanlagen mit Nennleistungen von mehreren MW, geeignet ist

Die erfindungsgemäße Vorrichtung lässt sich separat und vollständig in der Produktionsstätte vorfertigen. Einzelkomponenten wie die Antriebe, die Drehverbindung sowie optional die Bremsen müssen nicht erst auf der Baustelle zusammengefügt werden.Die Montage vor Ort muss nicht durch die Turmhersteller übernommen werden, welche in der Regel nicht das Know-How für diese Arbeiten besitzen. Die Montage auf der Baustelle wird durch das modulare Konzept vereinfacht. Alternativ kann die erfindungsgemäße Vorrichtung bei einem externen Zulieferer vorgefertigt und direkt zur Baustelle transportiert werden.

Die Erfindung hat weiterhin den Vorteil, dass eine solche Vorrichtung kompakter gebaut werden kann, als aus dem Stand der Technik bekannt. Durch diese Kompaktbauweise bzw. durch die Modulbauweise und die daraus resultierende Möglichkeit, einen Teil der Komponenten aus der Gondel herauszunehmen und bei Bedarf separat zu transportieren oder zu kranen, wird das Gewicht der Gondel reduziert. Dadurch kann je nach Nabenhöhe der Windenergieanlage ein kleinerer Errichtungskran genutzt werden, welcher in der Regel auf dem Markt besser verfügbar und kostengünstiger zu beschaffen ist.

Es ist möglich, die Vorrichtung zusammen mit der Gondel zur Baustelle zu transportieren, wodurch kein zusätzlicher Großtransport mehr gebraucht wird, sondern nur entsprechende Transportgestelle. Andererseits kann die Höhe der zu transportierenden Last der Gondel durch eine erfindungsgemäße Vorrichtung reduziert werden, um auch bei größeren Windenergieanlagen weiterhin einen Straßentransport zu ermöglichen. Hierzu wird die Vorrichtung getrennt von der Gondel transportiert.

Ein weiterer Vorteil ist es, dass die Einstellung des Zahnflankenspiels bereits in der Produktion erfolgen kann und nicht erst auf der Baustelle. Ebenso ist ein Probelauf des Azimutsystems in der Produktion möglich.

### Ausführung der Erfindung

Die Erfindung wird anhand von Zeichnungen näher erläutert. Hierzu zeigen
- Figur 1: eine schematische Darstellung einer Windenergieanlage,
- Figur 2: ein erstes Ausführungsbeispiel für die Anordnung der erfindungsgemäßen Vorrichtung an einer Gondel,
- Figur 3: die erfindungsgemäße Vorrichtung in einer Explosions-Darstellung,
- Figur 4: eine perspektivische Schnittdarstellung durch die erfindungsgemäße Vorrichtung
- Figur 5: eine Detailzeichnung einer Anordnung der erfindungsgemäßen Vorrichtung in einem Top-Tower-Segment,
- Figur 6: ein zweites Ausführungsbeispiel für die Anordnung der erfindungsgemäßen Vorrichtung in dem Top-Tower-Segment
- Figur 7: eine Detailzeichnung einer Anordnung von Azimuttragscheibe, Azimutdrehverbindung, und Azimutantrieb,
- Figur 8: ein drittes Ausführungsbeispiel für die Anordnung der erfindungsgemäßen Vorrichtung innerhalb der Gondel.

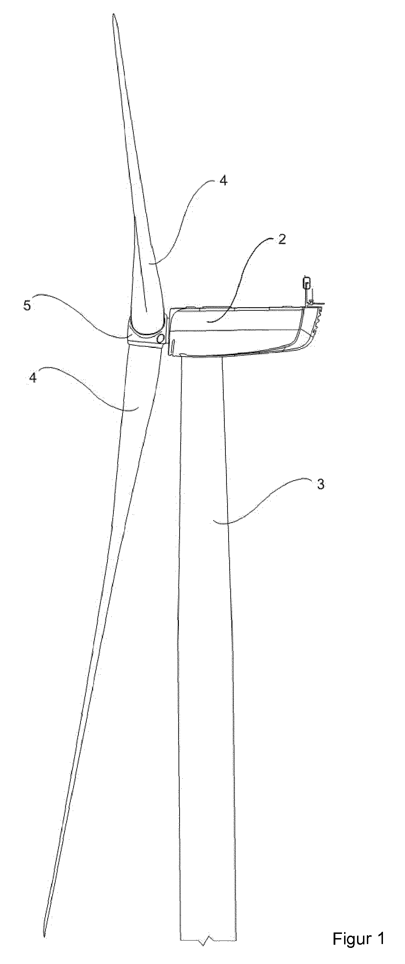

Soweit nichts anderes bestimmt, bezeichnen in den Figuren gleiche Bezugszeichen gleiche Gegenstände. Figur 1 zeigt eine schematische Darstellung einer Windenergieanlage, welche aus einem Turm 3 und einer drehbar auf dem Turmkopf gelagerten Gondel 2, welche ihrerseits einen Triebstrang (nicht dargestellt) lagert. Der Triebstrang weist eine Rotornabe 5 auf, die mit beispielsweise drei Rotorblättern 4 verbunden ist. Die erfindungsgemäße Vorrichtung 1 zum Drehen der Gondel 2 ist ein sogenanntes Azimutsystem und wird als eine kompakte Einheit vorgefertigt. Diese Vorfertigungseinheit wird bereits in der Produktion so gefertigt und eingestellt, dass keine größeren Montage- und Einstellarbeiten auf der Baustelle mehr erforderlich sind.

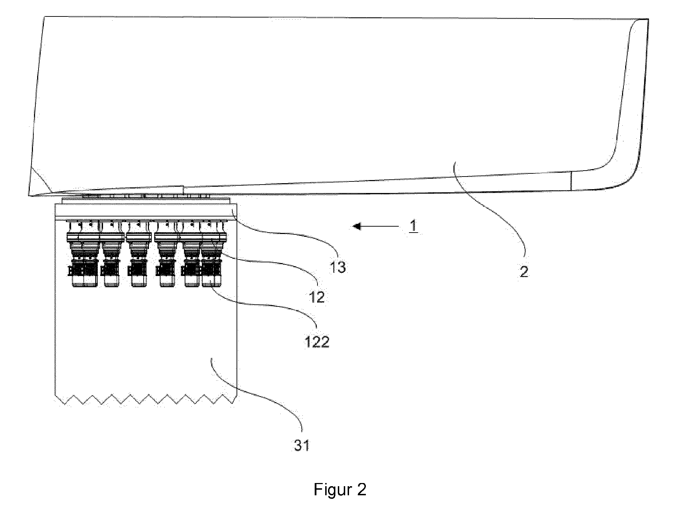

In Figur 2 wird eine Anordnung der erfindungsgemäßen Vorrichtung 1 zum Drehen der Gondel 2 um eine Längsachse des Turms 3 als ein erstes Ausführungsbeispiel gezeigt. Die Vorrichtung 1 ist in diesem Ausführungsbeispiel außerhalb der Gondel 2 angeordnet und ist im Betriebszustand direkt mit der Gondel 2 verbunden. Die Vorrichtung 1 beinhaltet als kompakte Einheit ein komplettes Azimutsystem. Die Vorrichtung 1 enthält eine Azimuttragscheibe 11, eine Azimutdrehverbindung 13, einen oder mehrere Azimutantriebe 12 und optional eine Azimutbremseinrichtung 14. Die Azimutantriebe 12 sind in diesem Ausführungsbeispiel nach Figur 2 hängend in den Turm 3 eingebaut, so dass die Azimutdrehverbindung 13 unterhalb der Gondel 2 im Turm 3 angeordnet ist.

Die erfindungsgemäße Vorrichtung 1 wird auf der Baustelle mit der oberen Turmsektion 31 verbunden. Dazu kann die Vorrichtung bereits am Boden an die obere Turmsektion 31 des Turmes 3 montiert werden. Nach Montage der oberen Turmsektion 31 auf dem Turm 3 wird die Gondel 2 auf den Turm 3 gehoben und an das Azimutsystem angeschlossen.

Die erfindungsgemäße Vorrichtung 1 besitzt in dem dargestellten Beispiel fünfzehn Verstellantriebe, vorliegend Azimutantriebe 12, von denen acht in Fig. 2 zu erkennen sind. Es ist allerdings auch möglich, weniger Azimutantriebe 12 anzuordnen. Dies richtet sich nach der benötigten Antriebsleistung für die Drehung der Gondel 2 der Windenergieanlage. Die Gondel 2 ist horizontal drehbar auf dem Turm 3 gelagert. Die Drehung der Gondel 2 um die Längsachse des Turms 3 erfolgt dabei in an sich bekannter Weise über die Azimutantriebe 12 und die Azimutdrehverbindung 13.

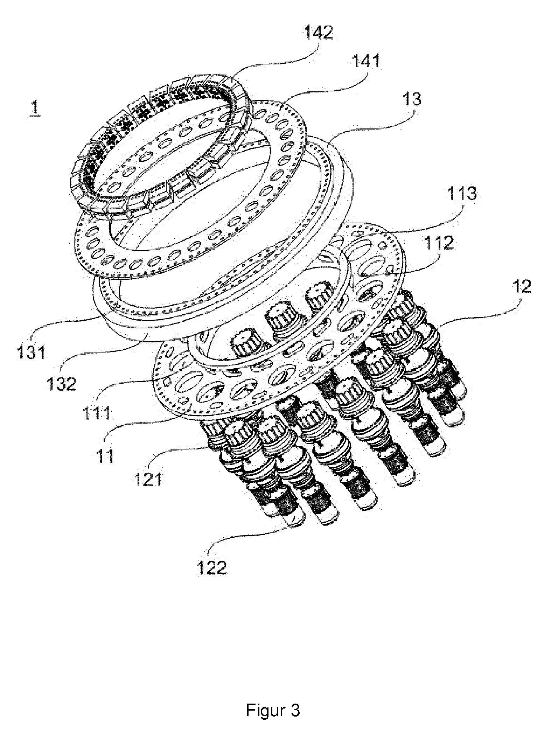

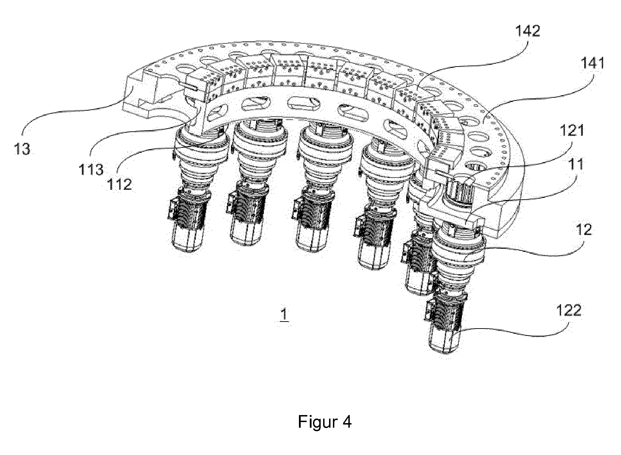

In Figur 3 wird die erfindungsgemäße Vorrichtung 1 in einer Explosions-Darstellung gezeigt und Figur 4 zeigt eine perspektivische Schnittdarstellung durch die erfindungsgemäße Vorrichtung 1. Die Azimuttragscheibe 11 dient der Aufnahme aller notwendigen Komponenten, wie Azimutdrehverbindung 13, Azimutantriebe 12 und Azimutbremseinrichtung 14. Die Azimuttragscheibe 11 kann beispielsweise als Blech oder Gussteil, als komplettes oder segmentiertes Bauteil, ausgeführt werden. Die Azimuttragscheibe 11 ist ein kreisringförmiges, flaches Bauteil mit mehreren, beispielsweise bis zu fünfzehn, um den Umfang in diesem Ausführungsbeispiel gleichmäßig verteilten Aufnahmeöffnungen 111 für die Aufnahme der Azimutantriebe 12. Eine ungleichmäßige Anordnung der Aufnahmeöffnungen 111 ist ebenfalls möglich. An der innenliegenden Kante 112 der Azimuttragscheibe 11 ist ein kreisringförmiger Flansch 113, beispielsweise in einem Winkel von 90 Grad zur Azimuttragscheibe 11, angeformt oder verschweißt. Auf der Azimuttragscheibe 11 ist die Azimutdrehverbindung 13 angeordnet. Die Azimutdrehverbindung 13, die auch als Azimutlager bezeichnet wird, besteht aus einem Innenring 131 und einem Außenring 132, die gegeneinander beweglich gelagert sind. Der Außenring 132 ist mittels einer lösbaren Verbindung mit der Azimuttragscheibe 11 fest verbunden. Der Innenring 131 weist eine Innenverzahnung (nicht dargestellt) auf. Auf der Azimuttragscheibe 11 sind bis zu fünfzehn Azimutantriebe 12 in den Aufnahmeöffnungen 111 in der Art montiert, dass jeder Azimutantrieb 12 mit einem Ritzel 121 in die Innenverzahnung des Innenrings 131 eingreift. Die Azimutantriebe 12 mit Getriebe befinden somit innerhalb der kreisringförmigen Azimuttragscheibe 11 und sind in dem Ausführungsbeispiel nach Figur 2 mit dem Motor 122 nach unten gerichtet. Der Motor 122 der Azimutantriebe 12 ist ein, optional mittels eines Frequenzumrichters (nicht dargestellt) in an sich bekannter Weise angesteuerter, Elektromotor. Die Azimutdrehverbindung 13 steht in dem vorliegenden Ausführungsbeispiel mit einer kreisringförmigen Azimutbremsscheibe 141 der Azimutbremseinrichtung 14 in Verbindung. Dazu ist die Azimutbremsscheibe 141 mit dem Innenring 131 lösbar verbunden. Die Azimutbremsscheibe 141 steht im Eingriff mit beispielsweise bis zu 24 Azimutbremskalibern 142, die Teil eines hydraulischen Bremssystems sind. Die Azimutbremskaliber 142 sind mit dem innenliegenden kreisringförmigen Flansch 113 der Azimuttragscheibe 11 mittels einer lösbaren Verbindung fest verbunden. Der kreisringförmige Flansch 113 endet in seiner Höhe oberhalb der Ritzel 121 der Azimutantriebe 12. Die Azimutbremskaliber 142 sind werksseitig vormontiert.

Die erfindungsgemäße Vorrichtung 1 ist variabel einsetzbar, was im Folgenden näher erläutert werden soll. Das erste Ausführungsbeispiel nach Figur 2 zeigt die Vorrichtung 1 mit den hängend angeordneten Azimutantrieben 12. In diesem Fall ist der Innenring 131 fest mit der Gondel 2 und der Außenring 132 fest mit dem Turm 3 verbunden. Zum Drehen der Gondel 2 der Windenergieanlage werden die Azimutantriebe 12, insbesondere die Elektromotoren der Azimutantriebe 12, mit einer bestimmten Drehzahl betrieben. Die Drehbewegung der Ritzel 121 der Azimutantriebe 12 wird auf die Innenverzahnung des Innenrings 131 übertragen. Über die Azimutdrehverbindung 13 kommt es zu einer Drehung der Gondel 2 um die Längsachse des Turms 3.

Für unterschiedliche Einbau-Lösungen kann exakt die gleiche Vorrichtung 1 verwendet werden. Die Einbaulage der Vorrichtung 1 kann beispielsweise derart gewählt werden, dass die Azimutantriebe 12 entweder hängend oder stehend angeordnet sind.

In der Praxis werden eher weniger als fünfzehn Azimutantriebe 12 auf der Azimuttragscheibe 11 montiert. Die dann freibleibenden Aufnahmeöffnungen 111 in der Azimuttragscheibe 11 können zu Wartungs- und Reparaturzwecken genutzt werden. Durch diese können einzelne Teile des Azimutsystems, wie beispielsweise Azimutnockenschalter und Azimutschmierritzel montiert, demontiert, geprüft, gewartet und getauscht werden. Weiterhin kann durch die Aufnahmeöffnungen 111 Altfett entfernt werden, welches aus der Azimutdrehverbindung 13 austritt.

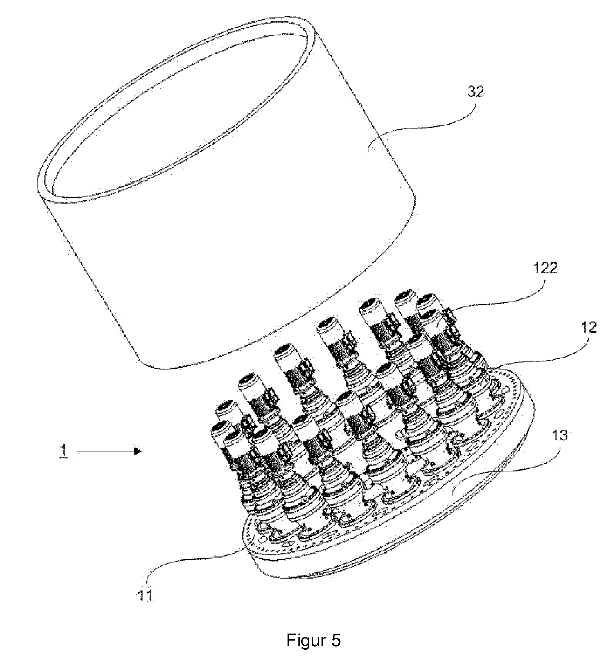

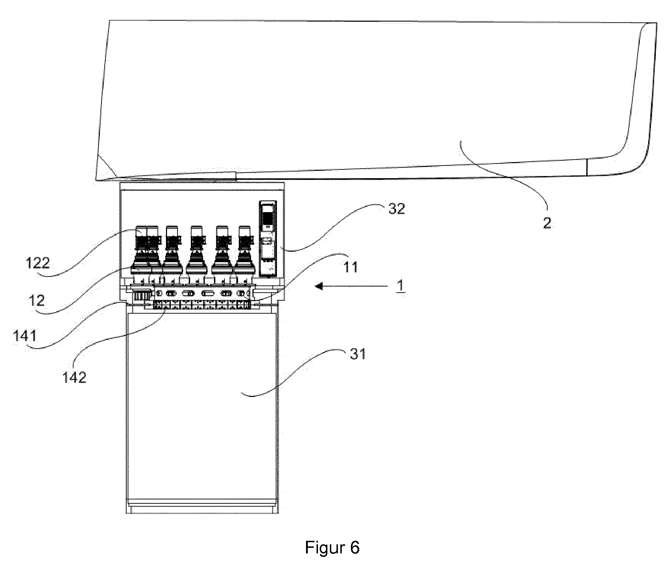

Eine weitere Anordnung der erfindungsgemäßen Vorrichtung 1 ist in den Figuren 5 und 6 zu sehen, wobei Figur 5 eine Detaildarstellung einer Anordnung nach Figur 6 zeigt.

Die erfindungsgemäße Vorrichtung 1 in Figur 5 wird entsprechend eines zweiten Ausführungsbeispiels mit den stehend montierten Azimutantrieben 12 in ein Top-Tower-Segment 32 eingefügt. Dieses Top-Tower-Segment 32 ist in seinem Durchmesser an das obere Turmsegment 31 angepasst. Nach oben hin ist das Top-Tower-Segment 32 über einen Flansch (nicht dargestellt) fest mit der Gondel 2 verbunden. Die Höhe des Top-Tower-Segments 32 entspricht der notwendigen Bauhöhe für den Einbau des Azimutsystems. Die Bauhöhe kann je nach Bedarf variieren, abhängig davon, ob ein Umrichterschrank für das Azimutsystem in das Top-Tower-Segment 32 integriert werden soll, oder nicht. Der Innenring 131 der Azimutdrehverbindung 13 ist fest mit dem Turm 3 und der Außenring 132 fest mit dem Top-Tower-Segment 32 verbunden, so dass sich das Top-Tower-Segment 32 gemeinsam mit der Gondel 2 dreht.

In Figur 6 ist zu erkennen, dass alle Elemente der erfindungsgemäßen Vorrichtung 1, wie die Azimutdrehverbindung 13 mit dem Innenring 131 und dem Außenring 132, die Azimutantriebe 12 und die Azimutbremseinrichtung 14 mit der Azimutbremsscheibe 141 den Azimutbremskalibern 142, auf der Azimuttragscheibe 11 angeordnet und mit dieser verbunden sind. Es wird auch deutlich, dass die gesamte Vorrichtung 1 mit dem Turm 3 verbunden wird. Dies kann getrennt von dem Top-Tower-Segment 32 erfolgen. Allerdings wird eine vorherige Verbindung mit dem Top-Tower-Segment 32 und eine anschließende Montage auf den Turm 3 bevorzugt.

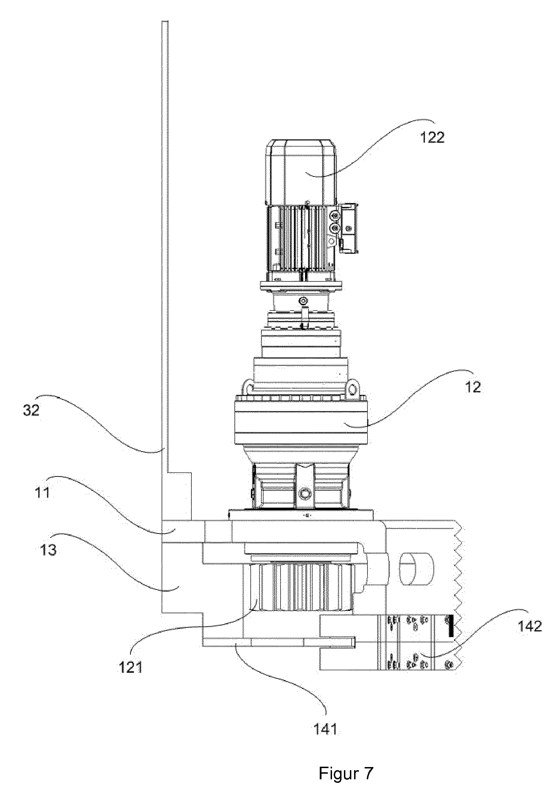

Figur 7 zeigt eine Detailzeichnung der Vorrichtung 1 in dem Top-Tower-Segment 32, wobei die Anordnung der Azimuttragscheibe 11, der Azimutdrehverbindung 13, des Azimutantriebs 12, der Azimutbremsscheibe 141 und des Azimutbremskalibers 142 entsprechend des in Figur 6 gezeigten zweiten Ausführungsbeispiels verdeutlicht wird.

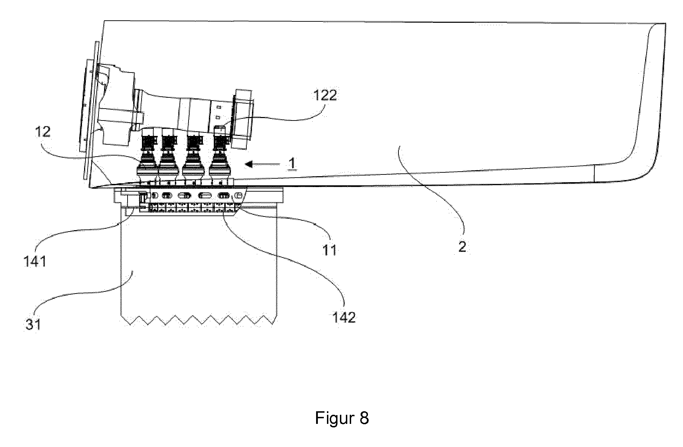

In Figur 8 ist ein drittes Ausführungsbeispiel für die Anordnung der Vorrichtung 1 dargestellt, welches die Variabilität der erfindungsgemäßen Vorrichtung 1 verdeutlichen soll. In vielen Windenergieanlagen soll das Azimutsystem in die Gondel 2 integriert werden. In der Regel stehen hier die Azimutantriebe 12 mit dem Außenring 132 der Azimutdrehverbindung 13 in Wirkverbindung. Dadurch ist der Platz für den Einbau und damit auch die Anzahl der Azimutantriebe 12 eingeschränkt. Da jedoch bei der erfindungsgemäßen Vorrichtung 1 die Azimutantriebe 12 mit dem Innenring 131 der Azimutdrehverbindung 13 in Wirkverbindung stehen, ist mehr Platz für den Einbau der Azimutantriebe 12 vorhanden. Bei diesem Ausführungsbeispiel können bis zu acht Azimutantriebe 12 angeordnet werden, und damit mehr als in den üblichen Anordnungen.

Wenn das Azimutsystem in die Gondel 2 integriert werden soll, sind unterschiedliche Anordnungen der Vorrichtung 1 vorstellbar. Bei der nach Figur 8 gezeigten Anordnung ist die Azimuttragscheibe 11 direkt auf der oberen Turmsektion 31 zwischen dieser und der Gondel 2 montiert und nur die Azimutantriebe 12 ragen stehend in die Gondel 2 hinein. Es ist auch möglich, dass die Azimuttragscheibe 11 mit in die Gondel oder in die obere Turmsektion 31 aufgenommen wird. Weiterhin können die Azimutantriebe 12 stehend oder hängend angeordnet werden.

### Bezugszeichen

- 1: erfindungsgemäße Vorrichtung
- 11: Azimuttragscheibe
- 111: Aufnahmeöffnungen
- 112: innenliegende Kante der Azimuttragscheibe 11
- 113: kreisringförmiger Flansch der Azimuttragscheibe 11

- 12: Azimutantriebe
- 121: Ritzel des Azimutantriebs 12
- 122: Motor des Azimutantriebs 12
- 13: Azimutdrehverbindung
- 131: Innenring der Azimutdrehverbindung 13
- 132: Außenring der Azimutdrehverbindung 13

- 14: Azimutbremseinrichtungen
- 141: Azimutbremsscheibe
- 142: Azimutbremskaliber

- 2: Gondel

- 3: Turm
- 31: obere Turmsektion
- 32: Top-Tower-Segment

- 4: Rotorblätter

- 5: Rotornabe

## Patentansprüche

1. Windenergieanlage mit einer drehbar auf einem Turm (3) gelagerten Gondel (2), sowie einer Vorrichtung (1) zum Drehen der Gondel (2) um eine Längsachse des Turms (3), wobei die Vorrichtung (1) als eine kompakte vorgefertigte Einheit aus einem kompletten Azimutsystem mit einer Azimuttragscheibe (11), einer Azimutdrehverbindung (13), einem oder mehreren Azimutantrieben (12) und optional einer Azimutbremseinrichtung (14) besteht.

2. Windenergieanlage nach Anspruch 1 **dadurch gekennzeichnet, dass** die Azimuttragscheibe (11) der Aufnahme aller für das komplette Azimutsystem notwendigen Komponenten, welches aus der Azimutdrehverbindung (13), dem oder den Azimutantrieben (12) und optional der Azimutbremseinrichtung (14) besteht, dient.

3. Windenergieanlage nach Anspruch 1 oder 2 **dadurch gekennzeichnet, dass** die Azimuttragscheibe (11) ein kreisringförmiges, flaches Bauteil mit mehreren, um den Umfang gleichmäßig oder ungleichmäßig verteilten Aufnahmeöffnungen (111) für eine Aufnahme der Azimutantriebe (12) ist.

4. Windenergieanlage nach Anspruch 1 **dadurch gekennzeichnet, dass** die Azimuttragscheibe (11) an ihrer innenliegenden Kante (112) einen kreisringförmigen Flansch (113) aufweist.

5. Windenergieanlage nach Anspruch 1 oder 2 **dadurch gekennzeichnet, dass** die auf der Azimuttragscheibe (11) angeordnete Azimutdrehverbindung (13) aus einem Innenring (131) mit einer Innenverzahnung und einem Außenring (132) besteht, wobei der Innenring (131) und der Außenring (132) gegeneinander beweglich gelagert sind, wobei der Außenring (132) fest mit der Azimuttragscheibe (11) verbunden ist.

6. Windenergieanlage nach Anspruch 5 **dadurch gekennzeichnet, dass** auf der Azimuttragscheibe (11) der oder die Azimutantriebe (12) in der Art montiert sind, dass jeder Azimutantrieb (12) mit einem Ritzel (121) in die Innenverzahnung des Innenrings (131) eingreift.

7. Windenergieanlage nach Anspruch 4 und 5 **dadurch gekennzeichnet, dass** die Azimutbremseinrichtung (14) aus einer kreisringförmigen Azimutbremsscheibe (141) und mindestens einem Azimutbremskaliber (142) besteht, wobei die Azimutbremsscheibe (141) mit dem Innenring (131) der Azimutdrehverbindung (13) lösbar verbunden ist und in Wirkverbindung mit dem mindestens einen Azimutbremskaliber (142) steht, und dass der mindestens eine Azimutbremskaliber (142) mit dem Flansch (113) der Azimuttragscheibe (11) verbunden ist.

8. Windenergieanlage nach einem der vorherigen Ansprüche 1 bis 7 **dadurch gekennzeichnet, dass**
die Vorrichtung (1) außerhalb der Gondel (2) angeordnet ist, wobei die Azimutantriebe (12) hängend in den Turm (3) hineinragen und dass die Azimutdrehverbindung (13) direkt unterhalb der Gondel (2) im oder am Turm (3) angeordnet ist, wobei der Innenring (131) der Azimutdrehverbindung (13) fest mit der Gondel (2) und der Außenring (132) der Azimutdrehverbindung (13) fest mit dem Turm (3) verbunden ist.

9. Windenergieanlage nach einem der vorherigen Ansprüche 1 bis 7 **dadurch gekennzeichnet, dass**
die Vorrichtung (1) mit den Azimutantrieben (12) stehend in einem Top-Tower-Segment (32) angeordnet ist, wobei der Innenring (131) der Azimutdrehverbindung (13) fest mit dem Turm (3) und der Außenring (132) der Azimutdrehverbindung (13) fest mit dem Top-Tower-Segment (32) in der Art verbunden ist, dass sich die Gondel (2) zusammen mit dem Top-Tower-Segment (32) dreht.

10. Windenergieanlage nach einem der vorherigen Ansprüche 1 bis 7 **dadurch gekennzeichnet, dass**
die Vorrichtung (1) innerhalb der Gondel (2) angeordnet ist, wobei die Azimutantriebe (12) stehend in die Gondel (2) hineinragen, wobei der Außenring (132) der Azimutdrehverbindung (13) fest mit der Gondel (2) und der Innenring (131) der Azimutdrehverbindung (13) fest mit dem Turm (3) verbunden ist.

11. Windenergieanlage nach einem der vorherigen Ansprüche 1 bis 7 **dadurch gekennzeichnet, dass**
die Vorrichtung (1) außerhalb der Gondel (2) angeordnet ist, wobei die Azimutantriebe (12) stehend in die Gondel (2) hineinragen, wobei der Außenring (132) der Azimutdrehverbindung (13) fest mit der Gondel (2) und der Innenring (131) der Azimutdrehverbindung (13) fest mit dem Turm (3) verbunden ist.

12. Verfahren zur Montage einer Vorrichtung (1) auf einen Turm (3) einer Windenergieanlage, wobei die Vorrichtung (1) zum Drehen einer Gondel (2) um eine Längsachse des Turms (3) geeignet ist, wobei die Vorrichtung (1) als eine kompakte vorgefertigte Einheit aus einem kompletten Azimutsystem mit einer Azimuttragscheibe (11), einer Azimutdrehverbindung (13), einem oder mehreren Azimutantrieben (12) und optional einer Azimutbremseinrichtung (14) besteht, mit den Schritten:
- Einsetzen der Vorrichtung (1) in eine obere Turmsektion (31) mit den Azimutantrieben (12) hängend
- oder Aufsetzen der Vorrichtung (1) auf eine obere Turmsektion (31) mit den Azimutantrieben (12) hängend
- Montage der oberen Turmsektion (31) auf den Turm (3),
- Montage der Gondel (2) auf die Vorrichtung (1),
- Anschließen des Azimutsystems.

13. Verfahren zur Montage einer Vorrichtung (1) auf einen Turm (3) einer Windenergieanlage, wobei die Vorrichtung (1) zum Drehen einer Gondel (2) um die Längsachse des Turms (3) geeignet ist, und die Vorrichtung (1) als eine kompakte vorgefertigte Einheit aus einem kompletten Azimutsystem mit einer Azimuttragscheibe (11), einer Azimutdrehverbindung (13), einem oder mehreren Azimutantrieben (12) und optional einer Azimutbremseinrichtung (14) besteht, mit den Schritten:
- Aufsetzen der Vorrichtung (1) auf den Turm (3) mit den Azimutantrieben (12) stehend
- Montage der Gondel (2) auf die Vorrichtung (1),
- Anschließen des Azimutsystems.

14. Verfahren zur Montage einer Vorrichtung (1) auf einen Turm (3) einer Windenergieanlage, wobei die Vorrichtung (1) zum Drehen einer Gondel (2) in einer Längsachse des Turms (3) geeignet ist, wobei die Vorrichtung (1) als eine kompakte vorgefertigte Einheit aus einem kompletten Azimutsystem mit einer Azimuttragscheibe (11), einer Azimutdrehverbindung (13), einem oder mehreren Azimutantrieben (12) und optional einer Azimutbremseinrichtung (14) besteht, mit den Schritten:
- Einsetzen der Vorrichtung (1) in ein Top-Tower-Segment (32) mit den Azimutantrieben (12) stehend
- Montage des Top-Tower-Segments (32) auf den Turm (3),
- Montage der Gondel (2) auf das Top-Tower-Segment (32),
- Anschließen des Azimutsystems.

15. Verfahren zur Montage einer Vorrichtung (1) auf einen Turm (3) einer Windenergieanlage, wobei die Vorrichtung (1) zum Drehen einer Gondel (2) um die Längsachse des Turms (3) geeignet ist, wobei die Vorrichtung (1) als eine kompakte vorgefertigte Einheit aus einem kompletten Azimutsystem mit einer Azimuttragscheibe (11), einer Azimutdrehverbindung (13), einem oder mehreren Azimutantrieben (12) und optional einer Azimutbremseinrichtung (14) besteht, mit den Schritten:
- Einsetzen der Vorrichtung (1) in die Gondel (2) mit den Azimutantrieben (12) stehend,
- Montage der Gondel (2) auf den Turm (3),
- Anschließen des Azimutsystems.

## Geänderte Patentansprüche

### Geänderte Patentansprüche gemäss Regel 137(2) EPÜ.

1. Windenergieanlage mit einer drehbar auf einem Turm (3) gelagerten Gondel (2), sowie einer Vorrichtung (1) zum Drehen der Gondel (2) um eine Längsachse des Turms (3), wobei die Vorrichtung (1) als eine kompakte, separat und vollständig vorgefertigte Einheit aus einem kompletten Azimutsystem mit einer Azimuttragscheibe (11), welche der Aufnahme aller für das komplette Azimutsystem notwendigen Komponenten dient, welche aus einer Azimutdrehverbindung (13), welche aus einem Innenring (131) mit einer Innenverzahnung und einem Außenring (132) besteht, wobei der Innenring (131) und der Außenring (132) gegeneinander beweglich gelagert sind und der Außenring (132) fest mit der Azimuttragscheibe (11) verbunden ist, einem oder mehreren Azimutantrieben (12) mit eingestelltem Zahnflankenspiel und/oder einer Azimutbremseinrichtung (14) besteht.

2. Windenergieanlage nach Anspruch 1 **dadurch gekennzeichnet, dass** die Azimuttragscheibe (11) ein kreisringförmiges, flaches Bauteil mit mehreren, um den Umfang gleichmäßig oder ungleichmäßig verteilten Aufnahmeöffnungen (111) für eine Aufnahme der Azimutantriebe (12) ist.

3. Windenergieanlage nach Anspruch 1 **dadurch gekennzeichnet, dass** die Azimuttragscheibe (11) an ihrer innenliegenden Kante (112) einen kreisringförmigen Flansch (113) aufweist.

4. Windenergieanlage nach Anspruch 1 **dadurch gekennzeichnet, dass** auf der Azimuttragscheibe (11) der oder die Azimutantriebe (12) in der Art montiert sind, dass jeder Azimutantrieb (12) mit einem Ritzel (121) in die Innenverzahnung des Innenrings (131) eingreift.

5. Windenergieanlage nach Anspruch 1 und 3 **dadurch gekennzeichnet, dass** die Azimutbremseinrichtung (14) aus einer kreisringförmigen Azimutbremsscheibe (141) und mindestens einem Azimutbremskaliber (142) besteht, wobei die Azimutbremsscheibe (141) mit dem Innenring (131) der Azimutdrehverbindung (13) lösbar verbunden ist und in Wirkverbindung mit dem mindestens einen Azimutbremskaliber (142) steht, und dass der mindestens eine Azimutbremskaliber (142) mit dem Flansch (113) der Azimuttragscheibe (11) verbunden ist.

6. Windenergieanlage nach einem der vorherigen Ansprüche 1 bis 5 **dadurch gekennzeichnet, dass**
die Vorrichtung (1) außerhalb der Gondel (2) angeordnet ist, wobei die Azimutantriebe (12) hängend in den Turm (3) hineinragen und dass die Azimutdrehverbindung (13) direkt unterhalb der Gondel (2) im oder am Turm (3) angeordnet ist, wobei der Innenring (131) der Azimutdrehverbindung (13) fest mit der Gondel (2) und der Außenring (132) der Azimutdrehverbindung (13) fest mit dem Turm (3) verbunden ist.

7. Windenergieanlage nach einem der vorherigen Ansprüche 1 bis 5 **dadurch gekennzeichnet, dass**
die Vorrichtung (1) mit den Azimutantrieben (12) stehend in einem Top-Tower-Segment (32) angeordnet ist, wobei der Innenring (131) der Azimutdrehverbindung (13) fest mit dem Turm (3) und der Außenring (132) der Azimutdrehverbindung (13) fest mit dem Top-Tower-Segment (32) in der Art verbunden ist, dass sich die Gondel (2) zusammen mit dem Top-Tower-Segment (32) dreht.

8. Windenergieanlage nach einem der vorherigen Ansprüche 1 bis 5 **dadurch gekennzeichnet, dass**
die Vorrichtung (1) innerhalb der Gondel (2) angeordnet ist, wobei die Azimutantriebe (12) stehend in die Gondel (2) hineinragen, wobei der Außenring (132) der Azimutdrehverbindung (13) fest mit der Gondel (2) und der Innenring (131) der Azimutdrehverbindung (13) fest mit dem Turm (3) verbunden ist.

9. Windenergieanlage nach einem der vorherigen Ansprüche 1 bis 5 **dadurch gekennzeichnet, dass**
die Vorrichtung (1) außerhalb der Gondel (2) angeordnet ist, wobei die Azimutantriebe (12) stehend in die Gondel (2) hineinragen, wobei der Außenring (132) der Azimutdrehverbindung (13) fest mit der Gondel (2) und der Innenring (131) der Azimutdrehverbindung (13) fest mit dem Turm (3) verbunden ist.

10. Verfahren zur Montage einer Vorrichtung (1) auf einen Turm (3) einer Windenergieanlage, wobei die Vorrichtung (1) zum Drehen einer Gondel (2) um eine Längsachse des Turms (3) geeignet ist, wobei die Vorrichtung (1) als eine kompakte, separat und vollständig vorgefertigte Einheit aus einem kompletten Azimutsystem mit einer Azimuttragscheibe (11), welche der Aufnahme aller für das komplette Azimutsystem notwendigen Komponenten dient, welche aus einer Azimutdrehverbindung (13), welche aus einem Innenring (131) mit einer Innenverzahnung und einem Außenring (132) besteht, wobei der Innenring (131) und der Außenring (132) gegeneinander beweglich gelagert sind und der Außenring (132) fest mit der Azimuttragscheibe (11) verbunden ist, einem oder mehreren Azimutantrieben (12) mit eingestelltem Zahnflankenspiel und/oder einer Azimutbremseinrichtung (14) besteht, mit den Schritten:
- Einsetzen der Vorrichtung (1) in eine obere Turmsektion (31) mit den Azimutantrieben (12) hängend
- oder Aufsetzen der Vorrichtung (1) auf eine obere Turmsektion (31) mit den Azimutantrieben (12) hängend
- Montage der oberen Turmsektion (31) auf den Turm (3),
- Montage der Gondel (2) auf die Vorrichtung (1),
- Anschließen des Azimutsystems.

11. Verfahren zur Montage einer Vorrichtung (1) auf einen Turm (3) einer Windenergieanlage, wobei die Vorrichtung (1) zum Drehen einer Gondel (2) um die Längsachse des Turms (3) geeignet ist, und die Vorrichtung (1) als eine kompakte, separat und vollständig vorgefertigte Einheit aus einem kompletten Azimutsystem mit einer Azimuttragscheibe (11), welche der Aufnahme aller für das komplette Azimutsystem notwendigen Komponenten dient, welche aus einer Azimutdrehverbindung (13), welche aus einem Innenring (131) mit einer Innenverzahnung und einem Außenring (132) besteht, wobei der Innenring (131) und der Außenring (132) gegeneinander beweglich gelagert sind und der Außenring (132) fest mit der Azimuttragscheibe (11) verbunden ist, einem oder mehreren Azimutantrieben (12) mit eingestelltem Zahnflankenspiel und/oder einer Azimutbremseinrichtung (14) besteht, mit den Schritten:
- Aufsetzen der Vorrichtung (1) auf den Turm (3) mit den Azimutantrieben (12) stehend
- Montage der Gondel (2) auf die Vorrichtung (1),
- Anschließen des Azimutsystems.

12. Verfahren zur Montage einer Vorrichtung (1) auf einen Turm (3) einer Windenergieanlage, wobei die Vorrichtung (1) zum Drehen einer Gondel (2) in einer Längsachse des Turms (3) geeignet ist, wobei die Vorrichtung (1) als eine kompakte, separat und vollständig vorgefertigte Einheit aus einem kompletten Azimutsystem mit einer Azimuttragscheibe (11), welche der Aufnahme aller für das komplette Azimutsystem notwendigen Komponenten dient, welche aus einer Azimutdrehverbindung (13), welche aus einem Innenring (131) mit einer Innenverzahnung und einem Außenring (132) besteht, wobei der Innenring (131) und der Außenring (132) gegeneinander beweglich gelagert sind und der Außenring (132) fest mit der Azimuttragscheibe (11) verbunden ist, einem oder mehreren Azimutantrieben (12) mit eingestelltem Zahnflankenspiel und/oder einer Azimutbremseinrichtung (14) besteht, mit den Schritten:
- Einsetzen der Vorrichtung (1) in ein Top-Tower-Segment (32) mit den Azimutantrieben (12) stehend
- Montage des Top-Tower-Segments (32) auf den Turm (3),
- Montage der Gondel (2) auf das Top-Tower-Segment (32),
- Anschließen des Azimutsystems.

13. Verfahren zur Montage einer Vorrichtung (1) auf einen Turm (3) einer Windenergieanlage, wobei die Vorrichtung (1) zum Drehen einer Gondel (2) um die Längsachse des Turms (3) geeignet ist, wobei die Vorrichtung (1) als eine kompakte, separat und vollständig vorgefertigte Einheit aus einem kompletten Azimutsystem mit einer Azimuttragscheibe (11), welche der Aufnahme aller für das komplette Azimutsystem notwendigen Komponenten dient, welche aus einer Azimutdrehverbindung (13), welche aus einem Innenring (131) mit einer Innenverzahnung und einem Außenring (132) besteht, wobei der Innenring (131) und der Außenring (132) gegeneinander beweglich gelagert sind und der Außenring (132) fest mit der Azimuttragscheibe (11) verbunden ist, einem oder mehreren Azimutantrieben (12) mit eingestelltem Zahnflankenspiel und/oder einer Azimutbremseinrichtung (14) besteht, mit den Schritten:
- Einsetzen der Vorrichtung (1) in die Gondel (2) mit den Azimutantrieben (12) stehend,
- Montage der Gondel (2) auf den Turm (3),
- Anschließen des Azimutsystems.
